(19) **Europäisches Patentamt / European Patent Office / Office européen des brevets**

(11) **EP 4 685 124 A1**

(12) # EUROPEAN PATENT APPLICATION

(43) Date of publication:
**28.01.2026 Bulletin 2026/05**

(21) Application number: **25192041.9**

(22) Date of filing: **28.07.2025**

(51) International Patent Classification (IPC):
**C04B 28/14** (2006.01)    **C04B 40/00** (2006.01)
**C04B 111/27** (2006.01)

(52) Cooperative Patent Classification (CPC):
(C-Sets available)
**C04B 28/14; C04B 40/0039;** C04B 2111/0062;
C04B 2111/27                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.07.2024 US 202463676093 P**

(71) Applicant: **Walker Industries Holdings Limited
Thorold, Ontario L2V 3Y8 (CA)**

(72) Inventors:
• **HUM, Rebecca Katie
  Guelph, N1H 4V5 (CA)**
• **SMEETS, Niels Mathieu Barbara
  Courtice, L1E 2C4 (CA)**
• **SINNIGE, Laurence Anthony
  Burlington, L7T 3M6 (CA)**

(74) Representative: **Schiweck Weinzierl Koch
Patentanwälte Partnerschaft mbB
Ganghoferstraße 68 B
80339 München (DE)**

(54) **COMPOSITIONS FOR IMPARTING WATER RESISTANCE TO GYPSUM WALLBOARDS**

(57)    Compositions comprising Kraft lignin and a wax are provided for use as an additive for imparting water resistance to gypsum wallboards. The compositions comprise emulsions of the lignin and wax components or an aqueous dispersion of the wax in a lignin solution. Methods of preparing and using such compositions are also provided.

EP 4 685 124 A1

(52) Cooperative Patent Classification (CPC): (Cont.)

C-Sets
**C04B 28/14, C04B 24/08, C04B 24/24,**
**C04B 24/34, C04B 2103/65;**
**C04B 28/14, C04B 24/18, C04B 24/34,**
**C04B 24/08;**
**C04B 40/0039, C04B 22/062, C04B 24/08,**
**C04B 24/122, C04B 24/24, C04B 24/34,**
**C04B 40/005, C04B 40/0085, C04B 2103/65**

**Description**

CROSS REFERENCE TO PRIOR APPLICATIONS

The present application claims priority to U.S. Application No. 63/676,093, filed July 26, 2024.

FIELD OF THE DESCRIPTION

The present invention relates to compositions that can be used in the manufacture of gypsum wallboard to impart water resistance. More specifically, in addition to the compositions as such, the present invention also relates to the use of formulations of Kraft lignin and wax for imparting water resistance. Such formulations may be in the form of emulsions or dispersions.

BACKGROUND

Gypsum products such as wallboard panels contain a hardened gypsum core contained between two paper liners that form the outside surfaces of the wallboard. The gypsum core is produced from a slurry of calcium sulphate hemihydrate ($CaSO_4 \cdot 0.5H_2O$) in water, which is allowed to hydrate (or set) to the much harder calcium sulphate dihydrate ($CaSO_4 \cdot 2H_2O$). Excess water is removed through drying, forming the hygroscopic calcium sulphate anhydrite ($CaSO_4$). Water absorption reverses the hydration state of the gypsum, leading to weakening of the wallboard. Therefore, additives such as asphalt, wax or siloxanes have been incorporated into the gypsum wallboard to produce a water-resistant product. Most of the gypsum wallboard manufactured relies on siloxanes for providing water-resistance, although in some cases the use of wax remains preferred.

Organosiloxane polymers, such as polymethyl siloxane and polymethyl hydrogen siloxane, have found wide-spread application in the manufacture of gypsum wallboard. Examples of the use of siloxanes in the manufacture of gypsum wallboard have been disclosed in e.g. US 3,455,710A by Nitzsche et al. and US 5,135,805A by Sellers et al. These additives provide water resistance by coating pores present in the gypsum matrix to block the transport of water. This is in contrast to wax which aggregates to block pores and reduce tortuosity in the gypsum matrix to prevent water intrusion. The water-resistance performance of wax then depends on its uniform distribution throughout the gypsum matrix. Preventing wax aggregation within the gypsum slurry is therefore of critical importance for water-resistance performance. Given the superior water-resistance, ease of use, and good compatibility with gypsum, siloxanes have largely replaced waxes for producing water-resistant gypsum wallboard.

Hydrocarbon waxes do not disperse well within an aqueous gypsum slurry and are therefore typically added in the form of an aqueous wax dispersion. Typically, the hydrocarbon wax is emulsified using a combination of an anionic low molecular weight dispersant and a non-ionic stabilizer, for example, US Patent 20100116406A1 by Mahoney and Burns teaches the use of a lignosulfonate dispersant and a polyvinyl alcohol stabilizer. Similarly, US Patents 5,968,237A by Sinnige; 9,045,370 B2 by Stuart, Lyons, and Perera; and 9,670,097 B2 by Ayambem, Gonzalez, and Sproul teach the combined use of a lignosulfonate, or other dispersant, in combination with a polyvinyl alcohol stabilizer.

Aqueous wax dispersions used in the manufacture of water-resistant gypsum wallboard are relatively complex products that consist of one or more hydrocarbon waxes, functional waxes, one or more stabilizers, one or more dispersants, and other additives to optimize product stability, whilst meeting water absorption, slump, and set requirements. Solids content of aqueous wax dispersions generally ranges from 35 - 45 w/w%. This complexity demands that these products are manufactured and subsequently shipped to the site of gypsum wallboard manufacture. Consequently, two main obstacles limit the use of aqueous wax dispersions in producing water-resistant gypsum wallboard: 1. these products contain 55 - 65 w/w% water, adversely impacting the carbon footprint, and 2. the associated manufacturing and logistical costs render them less cost-competitive compared to organosiloxanes. As a result, the industry has largely shifted to the use of organosiloxanes over wax.

On-site manufacture of wax emulsions has been commercially available in the production of engineered wood composites such as oriented strand board (OSB). US 6,908,677 B2 by Shoshany et al. discloses a method for the use of a wax suspension for improving water repelling characteristics of composite wood panels, where the wax suspension is defined as a dispersion of liquid particles in a fluid where the particles are suspended by buoyancy and is created by suspending a molten wax in hot water. A similar approach has been disclosed in US 6,902,615 B2 by Shoshany for producing gypsum wallboard, where a suspension is made on-site, providing significant savings in energy, storage, manpower, etc. Neither US 6,902,615 B2 nor US 6,908,677 B2 disclose the use of a specific emulsifier, dispersant or stabilizer to provide some degree of stability to the suspension and effective distribution of the wax in the gypsum slurry. Nor do these patents disclose how the water-resistance performance of these wax suspensions compares against the use of wax dispersions.

The use of organosiloxanes in the manufacture of gypsum wallboard has some negative implications (for example: environmental concerns around VOCs) which are currently largely outweighed by the benefit of water-resistance performance as compared to the cost per thousand square feet (MSF) of board produced. However, if the water-resistance performance can be improved or the cost per MSF decreased, the use of wax provides a preferred and more sustainable option for the manufacture of gypsum wallboard. On-site manufacture of wax emulsions can provide a significant reduction in the cost per MSF of board produced. However, wax dispersions produced commercially contain too much complexity (both in terms of the number of components as well as the chemical nature of those components) to allow for on-site manufacture. For example, the polyvinyl alcohol stabilizers which are commonly used do not dissolve in cold water, require high shear agitation for dissolution at high temperature, generally have low water-solubility, and degrade once dissolved in water. These features have hampered the implementation of on-site emulsification of wax in the manufacture of gypsum wallboard.

There is, therefore, a need in the art for a more efficient wax-based product that can provide the required water-resistance performance for gypsum wallboard at a cost per MSF that is competitive with organosiloxanes.

SUMMARY OF THE DESCRIPTION

In one aspect of the application there is provided a composition suitable or adapted for imparting water resistance in the manufacture of gypsum wallboard, wherein the composition comprises lignin and a wax.

In one embodiment, there is provided a composition suitable or adapted for use as an additive in the manufacture of gypsum wallboards for imparting water resistance to the manufactured gypsum wallboard, said composition comprising:

a) an aqueous emulsion of Kraft lignin, wax, water, and a base, wherein: the wax is in a molten state; the base is present in an amount sufficient to solubilize the Kraft lignin; and, the weight ratio of Kraft lignin to wax, $\alpha$, is at least about 0.25; or,

b) an aqueous dispersion comprising a Kraft lignin, wax, water, and a base, wherein: the wax forms the solid phase; the base is present in an amount sufficient to solubilize the Kraft lignin; and, the weight ratio of Kraft lignin to wax, $\alpha$, is from about 0.09 to about 2.25.

In a further embodiment, there is provided a use of the compositions described herein in the manufacture of gypsum wallboards for imparting water resistance characteristics to such wallboards.

In another embodiment, the present description provides methods of preparing the compositions as described above.

In one embodiment, the description provides a method of preparing the composition described above, wherein the method comprises:

i) for composition (a): combining an aqueous solution comprising the Kraft lignin and the base with the molten wax; and emulsifying the mixture of the lignin and base solution and the molten wax under high shear to form an emulsion; or,

ii) for composition (b): mixing an aqueous solution of Kraft lignin and the base with an aqueous dispersion of the wax.

BRIEF DESCRIPTION OF THE DRAWINGS

The features of certain embodiments will become more apparent in the following detailed description in which reference is made to the appended figures wherein:

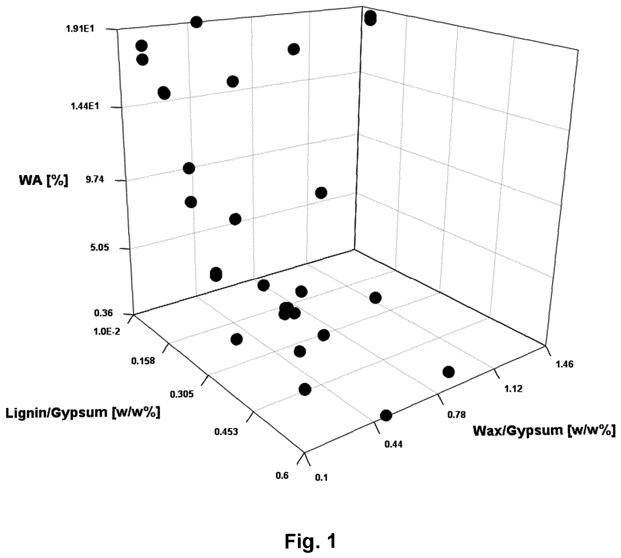

Fig. 1 shows the impact of wax and lignin on water absorption (WA) of a gypsum formulation. The graph depicts WA as a function (%, z-axis) of the lignin content (i.e. lignin/gypsum; w/w%; x-axis) and wax content (i.e. wax/gypsum; w/w%; y-axis). The percentage of water absorbed is shown as a gradient across a range of dosages.

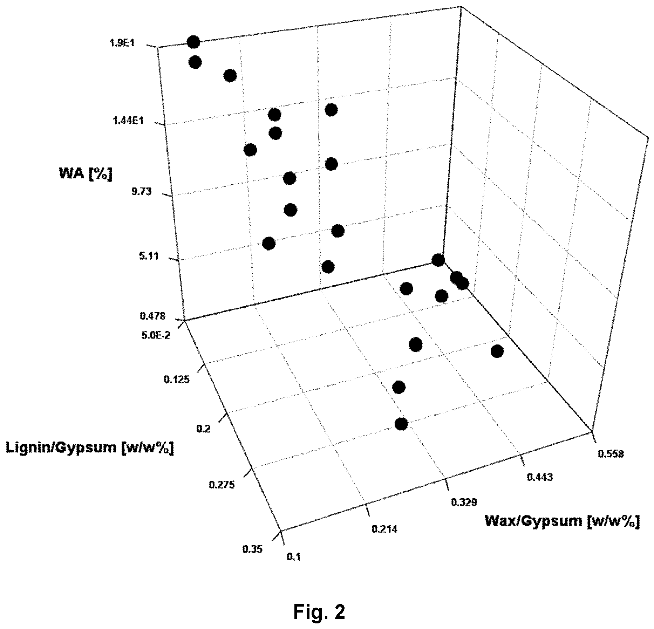

Fig. 2 shows impact of refined paraffin wax dispersion and Kraft lignin on water absorption (WA) of a gypsum formulation. The graph depicts WA (%, z-axis) as a function of the lignin content (i.e. lignin/gypsum; w/w%; x-axis) and refined paraffin wax dispersion content (i.e. wax dispersion/gypsum; w/w%; y-axis). The percentage of water absorbed is shown as a gradient across a range of dosages.

DETAILED DESCRIPTION

In accordance with the description, there is provided a composition for imparting water resistance comprising an emulsion of Kraft lignin and wax, a method for preparing the composition and its use in the manufacture of gypsum wallboards.

As used herein, the following terms will be understood to have the following meanings.

Unless stated otherwise herein, the articles "a" or "the", when used to identify an element, are not intended to constitute a limitation of just one and will, instead, be understood to mean "at least one" or "one or more". Thus, unless stated otherwise, as used in this specification and the appended claims, the singular forms "a", "an", and "the" will be understood to include the plural form. For example, reference to "a container" will be understood to include one or more of such containers and reference to "the excipient" will be understood to include one or more of such excipients.

As used herein, the term "about" is synonymous with "approximately" and is used to provide flexibility to a numerical value or range endpoint by providing that a given value may be "a little above" or "a little below" the value stated. "About" can mean, for example, within 3 or more than 3 standard deviations. "About" can mean within a percentage range of a given value. For example, the range can be $\pm1\%$, $\pm5\%$, $\pm10\%$, $\pm20\%$, $\pm30\%$, $\pm40\%$ or $\pm50\%$ of a given value. "About" can mean with an order of magnitude of a given value, for example, within 2-fold, 3-fold, 4-fold, or 5-fold of a value. However, it is to be understood that even when a numerical value is accompanied by the term "about" in this specification, that express support shall be provided at least for the exact numerical value as well as though the term "about" were not present.

The term "and/or" can mean "and" or "or".

The terms "comprise", "comprises", "comprised" or "comprising" may be used in the present description. As used herein (including the specification and/or the claims), these terms are to be interpreted as specifying the presence of the stated features, integers, steps or components, but not as precluding the presence of one or more other feature, integer, step, component or a group thereof as would be apparent to persons having ordinary skill in the relevant art. Thus, the term "comprising" as used in this specification means "consisting at least in part of". Related terms such as "comprise" and "comprised" are to be interpreted in the same manner.

As used herein, "comprises," "comprising," "containing" and "having" and the like can have the meaning ascribed to them in patent law and can mean "includes," "including," and the like, and are generally interpreted to be open ended terms. The terms "consisting of" or "consists of" are closed terms, and include only the components, structures, steps, or the like specifically listed in conjunction with such terms, as well as that which is in accordance with patent law.

The phrase "consisting essentially of" or "consists essentially of" will be understood as generally closed terms, with the exception of allowing inclusion of additional items, materials, components, steps, or elements, that do not materially affect the basic and novel characteristics or function of the item(s) used in connection therewith. For example, trace elements present in a composition, but not affecting the composition's nature or characteristics would be permissible if present under the "consisting essentially of" language, even though not expressly recited in a list of items following such terminology. When using an open-ended term, such as "comprising" or "including", it will be understood that direct support should be afforded also to "consisting essentially of" language as well as "consisting of" language as if stated explicitly and vice versa. In essence, use of one of these terms in the specification provides support for all of the others.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and should be interpreted flexibly to include not only the numerical values explicitly recited as the limits of the range, but to also include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but to also include individual values and sub-ranges within the indicated range. Thus, included in this numerical range are individual values such as 2, 3, and 4 and sub-ranges such as from about 1 to about 3, from about 2 to about 4, and from about 3 to about 5, etc., as well as 1, 2, 3, 4, and 5, individually. This same principle applies to ranges reciting only one numerical value as a minimum or a maximum. Furthermore, such an interpretation should apply regardless of the breadth of the range or the characteristics being described.

"Dispersion", as used with respect to the present description, will be understood to mean a composition comprising a liquid continuous aqueous phase and solid dispersed phase, see "IUPAC. Compendium of Chemical Terminology", 2nd ed. (the "Gold Book") compiled by A. D. McNaught and A. Wilkinson. Blackwell Scientific Publications, Oxford (1997).

"Emulsion", as used with respect to the present description, will be understood to mean a composition comprising two immiscible liquids containing a continuous aqueous phase and liquid dispersed phase; see "IUPAC. Compendium of Chemical Terminology", 2nd ed. (the "Gold Book") compiled by A. D. McNaught and A. Wilkinson. Blackwell Scientific Publications, Oxford (1997). As known in the art, the term "emulsion" may be used in the reverse, namely, to identify a liquid aqueous phase dispersed within a continuous nonaqueous phase. However, for the purposes of the present description, the invention will generally be described in terms of the former meaning.

"Suspension" as used with respect to the present description, will be understood to mean a dispersion of liquid particles in a fluid, the particles being suspended by buoyancy; as defined in US Patents 6,902,615 B2 and 6,908,677 B2 which are incorporated herein by reference.

"Lignin" as used herein refers to a "technical lignin" which comprises a complex mixture of macromolecules consisting of coniferyl (guaiacyl), synapyl (synringyl), and p-coumaryl (p-hydroxyphenyl) repeat units, extracted from lignocellulosic materials such as wood. Important physiochemical properties of lignin such as the molecular weight, ash content, hydroxyl number, and so on vary with the process used to extract lignin.

The term "technical lignin" as used herein refers to a lignin that is modified, separated, and purified from biomass. The technical lignin structure can vary with the process and chemical reaction used in the biomass treatment. See, for example, Ekielski, A. and Mishra, P.K. Int. J. Mol. Sci. 2021, 22, 63.

"Lignosulfonate" as used herein will be understood to mean a "technical lignin" that is extracted from wood using the sulfate pulping process. Lignosulfonates are typically relatively low molecular weight and sulfonated (and thus anionic). Lignosulfonates can contain impurities, most often present in the form of sugars. Examples of commercial sources of lignosulfonates include those produced by Borregaard and Rayonier.

"Kraft lignin" as used herein refers to a "technical lignin" that is extracted from wood using the Kraft pulping process. In particular examples, the Kraft lignin is a purified Kraft lignin. The term "purified Kraft lignin" as used herein refers to a Kraft lignin which has been purified or extracted using the LignoBoost™ process (as disclosed in WO2014116150A1), or the LignoForce™ process (as disclosed in U.S. Pat. No. 9,091,023 B2), or other similar process. One example of a commercial sources of purified Kraft lignin is BioPiva™ from UPM.

The "equivalent lignin mass ratio" or "$\alpha$" as used herein refers to the weight ratio of lignin to wax of the aqueous wax dispersion or aqueous wax emulsion and is defined by the following formula:

$$\alpha = \text{dry mass of lignin/mass of wax}.$$

The "equivalent base mass ratio" or "$\beta$" as used herein refers to the weight ratio of base to lignin of the aqueous wax dispersion or aqueous wax emulsion and is defined by the following formula:

$$\beta = \text{dry mass of base / dry mass of lignin}.$$

"Wax" as used herein will be understood to mean any known waxes that are suitable for use in manufacturing gypsum wallboard. This includes petroleum derived slack waxes, scale waxes, or refined waxes, synthetic waxes (such as alphaolefin wax or Fischer Tropsch wax), or natural waxes. In a preferred embodiment, the waxes used in the presently described formulations comprise refined waxes, primarily for providing consistency. In a preferred embodiment, the wax used herein comprises a refined paraffin wax. It will, however, be understood that any of the aforementioned waxes may be used in the presently described formulation. It will be understood that in some instances further modifications of the formulations may be necessary, such as a need for additional lignin to be employed.

"Functionalized wax" or "oxidized wax" as used herein will be understood to mean a mostly hydrocarbon wax that contains some carboxylic acid functionality (carboxylic acid functional groups). Examples of oxidized waxes include naturally occurring crude and refined Montan wax, and synthetically produced oxidized polyethylene or oxidized polypropylene waxes.

"Olefinic succinic anhydride wax" as used herein will be understood to mean a mostly hydrocarbon wax that contains some carboxylic acid functionality. It is one example of an oxidized wax. It is the reaction product of an olefin wax and maleic anhydride. Examples of olefinic succinic anhydride wax include commercially available alkenyl succinic anhydride wax (or ASA).

"Emulsifier" as used herein will be understood to be a surface-active agent (also called a "surfactant") which lowers the surface tension of the medium in which it is dissolved, and/or lowers the interfacial tension with other phases. The emulsifier facilitates the formation of an emulsion and increases the colloidal stability of the resulting emulsion of dispersion (IUPAC, Compendium of Chemical Terminology, 2nd ed. (the "Gold Book") Compiled by A. D. McNaught and A. Wilkinson. Blackwell Scientific Publications, Oxford (1997)).

"Stabilizer" as used herein will be understood to mean high molecular weight polymers which are typically, but not necessarily, non-ionic in nature. In the prior art the term "stabilizer" typically refers to polyvinyl alcohol or polyvinyl alcohol derivatives. In the present application the term "stabilizer" can include other stabilizers such as a purified Kraft lignin.

"Dispersant" as used herein will be understood to mean a low molecular weight surfactant which can be anionic, non-ionic, or cationic in nature. Lignosulfonates are one example of a material that has been used as a dispersant.

"Water absorption" or "WA" as used herein will be understood to mean the amount of water absorbed by a gypsum puck or gypsum wallboard under controlled conditions. The water absorption is measured gravimetrically and expressed as a percentage as compared to the dry weight of the specimen. In one embodiment, and as discussed further herein, a WA of < 2% is preferred for achieving desired performance criteria.

"Slump" or "water demand" as used herein will be understood to be a measure of the fluidity of the gypsum slurry. The slump is measured as the slurry flow distance and expressed as the distance in inches from the centre of the patty.

The terms "water repellency" and "water resistance" are used herein to describe the ability of a gypsum formulation comprising the emulsions described herein to hinder water absorption. Thus, although the aforementioned terms may be used interchangeably in the present description, and in the art, they will be understood to have the same meaning.

"Set" or "Setting time" as used herein will be understood to be a measure of the rate of drying of a gypsum slurry. The set is measured using a Gillmore Needle Apparatus and expressed as the time needed to reach sufficient hardness to withstand the pressure of the weighted needle.

"Solids" or "solids content" as used herein will be understood to refer to the amount (expressed as a weight percentage) of non-volatile material in the dispersion. More accurately, these terms refer to the total amount of non-volatile material that remains after evaporation or drying to a constant weight.

As used herein, the term "aqueous wax emulsion" is defined as a molten wax emulsion comprising molten wax and Kraft lignin solution.

As used herein, the term "stable wax dispersion" is defined as an aqueous wax dispersion displaying no creaming and/or wax fall-out, or a change in viscosity for a period of at least 2 weeks at room temperature.

As used herein, the term "stable wax emulsion" is defined as an aqueous wax emulsion displaying no significant creaming and/or wax fall-out, or no significant change in viscosity for a period of at least 2 weeks at room temperature. In general, the stability of an emulsion is assessed and/or characterized, either qualitatively or quantitatively, by visual inspection. For example, such inspection may be conducted by a stability test after 15 min at 80oC, using a qualitative classification scale (0 - 4) for the degree of creaming ("w") and/or the degree of coalescence ("o"). In one example, a classification of "0", i.e. no coalescence and/or creaming, and "1", i.e. minimal coalescence and/or creaming after 15 min at 80oC, is considered a stable aqueous wax emulsion.

As described herein, the present inventors have found that emulsions consisting solely of Kraft lignin, a base and wax can be used in the manufacture of water-resistant gypsum wallboard. These emulsions can be manufactured on-site and on-demand and provide water-resistance properties comparable to commercially used wax dispersions, but at a significantly reduced cost per MSF of gypsum wallboard. These compositions have been found to be cost competitive with those comprising organosiloxane.

In particular, it has been found by the present inventors that the two main components comprising the emulsion, i.e. Kraft lignin and wax, provide a synergistic effect in terms of reducing WA. Contrary to previous disclosures where Kraft lignin has been used as a stabilizer, in the present emulsion composition Kraft lignin is acting primarily as a water-resistance additive which works in conjunction with the wax to provide water-resistance characteristics to wallboards formed using emulsions as described herein. Emulsifying, stabilizing, and preventing aggregation of the wax is a secondary feature of Kraft lignin in this composition. As a result, the Kraft lignin-wax emulsions and dispersions described herein may consist predominantly of Kraft lignin, but do not show the expected deterioration of water-resistance performance which has been reported in the prior art when the wax fraction is reduced. Fig. 1 shows that good WA can be achieved once a threshold level of wax and Kraft lignin content is present in the gypsum slurry. No additional water-resistance additives are required to achieve WA targets. The simplicity of the compositions described herein allows for on-site manufacture using a simple high shear mixing device, which substantially reduces cost.

As discussed above, lignin generally refers to complex polyphenolic polymers and is extracted from lignocellulosic material using a variety of industrial processes, such as, Kraft or soda pulping, sulphite pulping, bioethanol production, etc. "Technical lignins" isolated using these processes include Kraft lignin, soda lignin, lignosulfonates, Organosolv lignin, etc. In one embodiment, the technical lignin used herein preferentially comprises a purified form of lignin that can be solubilized in water. In a particular embodiment, the lignin is a purified form of lignin obtained from black liquor in the Kraft process.

Kraft lignin is extracted from black liquor as a by-product from the Kraft pulping process. Kraft lignin can be further processed and purified. Commercial processes have been developed for extracting and purifying Kraft lignin, generally involving acidification of the black liquor using carbon dioxide followed by a coagulation stage, filtration and washing with acid and water. The first example of such a process has been described in U.S. Pat. No. 2,464,828 by Pollak. Additional, and more recent, processes are described in WO2014116150A1 ("LignoBoost™ process"), or U.S. Pat. No. 9,091,023 B2 ("LignoForce™ process"). The resulting Kraft lignin is of high purity and can be suspended in water to form a purified Kraft lignin suspension with a pH of 2-4.

While the term Kraft lignin may have been used indiscriminately in the prior art to refer to other products derived from a Kraft pulping process, such as, tall oil fatty acid based amidoamine blends (see for example US 8,821632), in the present description the term Kraft lignin is reserved for lignin obtained from a Kraft pulping process.

For the purpose of acting as a water-resistance additive and stabilizer, Kraft lignin needs to be solubilized in water. Dissolution of Kraft lignin, i.e. deprotonation of its acidic form, is achieved in the presence of a sufficient quantity of a base of sufficient strength. Suitable bases for solubilizing purified Kraft lignin are water-soluble strong bases. Other suitable bases for solubilizing purified Kraft lignin include water-soluble weak bases with a pKa of approximately 9.4 or higher. Still, other suitable bases for solubilizing purified Kraft lignin include water-soluble bases with a pKa of lower than 9.4. Various such suitable water-soluble bases would be known to one of skill in the art. The amount of base required to achieve complete solubility of the purified Kraft lignin is a function of the pKa of the base. As such, bases with a pKa of approximately 9.4 or higher are preferred, on the basis that substantially less base is required to achieve complete dissolution of the purified Kraft lignin macromolecules.

In one embodiment the bases for the invention include sodium hydroxide, potassium hydroxide and monoethanolamine. In a particular embodiment the base is potassium hydroxide.

The amount of a suitable water-soluble base required to solubilize purified Kraft lignin is expressed as the equivalent base mass ratio or $\beta$. For purified Kraft lignin, the relative solubility can be expressed as a function of the equivalent base mass ratio $\beta$. For example, for purified Kraft lignin an equivalent base mass ratio of $\beta \geq 0.10$ is selected to fully solubilize purified Kraft lignin. More preferably, a $\beta \geq 0.13$. However, as the composition and molecular structure of purified Kraft lignin is highly dependent on the wood source and extraction process, the value of $\beta$ can vary.

The waxes that can be used in the formulation of this invention may comprise any known waxes that are suitable for use in manufacturing of gypsum wallboard. For example, the wax component of the aqueous wax dispersion may comprise any naturally occurring wax derived from petroleum, vegetable oil or animal fat, or any synthetic wax, or blends thereof. Preferentially, the aqueous wax dispersion comprises a petroleum derived wax. In particular, the petroleum derived wax comprises a refined paraffin wax. Preferred refined paraffin waxes have an oil content of < 1%, low penetration, and a normal paraffin content of approximately 80% or higher as measured by gas chromatography.

In one embodiment, the aqueous wax emulsion of this invention is produced by emulsification of molten refined paraffin wax with an aqueous solution of Kraft lignin. The aqueous wax emulsion is formed from emulsification under high shear.

Various high shear mixing devices, as known in the art, may be used to emulsify wax with the aqueous phase containing the lignin emulsifier to form a stable wax emulsion which may be used directly. The efficiency of the high shear mixing device is dependent on the energy provided to create sufficient inertial forces to overcome the surface tension forces. Commonly used high shear devices include rotor-stator mixers and high-pressure homogenizers. In both devices, a coarse emulsion of two immiscible liquids passes through a narrow gap, which causes high inertial forces that cause one of the liquid phases to break up in small droplets. Another type of emulsification device is based on ultrasonic cavitation, where high intensity ultrasound generates cavitation bubbles that, upon implosion, cause intensive shockwaves and high local velocities which can emulsify one liquid in another. These high shear mixing devices are commonly used to produce aqueous wax dispersions.

Yet another shear mixing device is based on hydrodynamic cavitation (a so-called liquid whistle), where a coarse emulsion of two immiscible liquids at high pressure passes through a narrow orifice and over a blade, causing formation of cavitation bubbles that, upon implosion, cause intensive shockwaves and high local velocities which can emulsify one liquid in another. An example of such as device is the Sonolator™ as produced by Sonic Corporation.

According to one embodiment, the aqueous wax emulsions of this invention can be produced using different high shear mixing devices, including the Silverson™ mixer (rotor-stator type), APV 31MR Lab Homogenizer (homogenizer type), and the Sonolator™ (hydrodynamic cavitation type).

Aqueous wax emulsions are kinetically stable, that is they demonstrate stability only for a limited period of time after which the emulsion breaks (i.e. the emulsion separates into a liquid wax and aqueous phase). The process by which an aqueous wax emulsion breaks is generally considered to be related to a change in the droplet size distribution due to coalescence. Macroscopically, this process is observed as de-emulsification. As used herein, the term "stable aqueous wax emulsion" is defined as an aqueous wax emulsion displaying minimal coalescence and/or creaming as determined visually from an emulsion stability test. The stability of the emulsion is assessed after 15 min at 80oC, using a qualitative classification scale (0 - 4) for the degree of creaming ("w") and/or the degree of coalescence ("o"). A classification of "0", i.e. no coalescence and/or creaming, and "1", i.e. minimal coalescence and/or creaming after 15 min at 80oC, is considered a stable aqueous wax emulsion. Some degree of emulsion stability is required to ensure effective dispersion of the wax within the gypsum slurry.

Stable aqueous wax emulsions comprising a slack wax stabilized by Kraft lignin can be made using a lignin to wax mass ratio, or "$\alpha$", of at least 0.008, or more preferentially an $\alpha$ of at least 0.01 for most waxes. Refined paraffin waxes, on the other hand, are generally more difficult to emulsify due to the relatively low oil content of these waxes. Consequently, it has been found that a substantially higher $\alpha$ value is required to make a stable aqueous wax emulsion incorporating refined paraffin wax. For example, as illustrated in Example 3 herein, an $\alpha$ of at least 0.25 is required for a stable lignin-refined paraffin wax emulsion for achieving the required stability. The presence of oil in the wax has been found to have a stabilizing effect on wax emulsions, [see Influence of Oil Content in Paraffins on the Behavior of Wax Emulsions: Wetting and Rheology, Rodriquez-Valverde, M.A. et al., J. Dispersion Sci. Tech. 2006, 27, 155-163].

Whereas a high $\alpha$ can be a detriment or ineffective in some applications, the present inventors have surprisingly found that a high $\alpha$ has been found to be unexpectedly beneficial for the purpose of the emulsions described herein. Kraft lignin functions as a water-resistance additive, imparting water resistance to the gypsum wallboard. Without wishing to be bound by theory, it is believed that this is a result of the ion-exchange that occurs when the aqueous wax dispersion is introduced into the gypsum slurry. During manufacture of the aqueous wax dispersion the purified Kraft lignin is neutralized in the presence of a base. The cationic counterion to the negatively charged purified Kraft lignin has to be chosen in such as way that the resulting complex is water-soluble to liberate the emulsifier characteristics of the Kraft lignin. However, once added to the gypsum slurry an ion-exchange reaction can occur where the cationic counterion is displaced with a calcium cation. The resulting complex is water-insoluble and water repellent in nature. This is similar to "soap scums" formed when fatty acid soaps are exposed to hard, calcium-rich, water.

The on-site manufacture allows for emulsion compositions which cannot be manufactured as stable dispersions. As known in the art, refined paraffin wax dispersions typically contain 2 - 10 w/w% of Kraft lignin,. This corresponds to an $\alpha$ ranging from 0.05 to 0.33. On the other hand, the compositions of the emulsions described herein comprise $\alpha$ values of 0.5 or higher. More preferably, the $\alpha$ values of the presently described emulsions may even be from about 1.0 to about 2.0, effectively shifting towards compositions that comprise more Kraft lignin than refined paraffin wax. Thus, the $\alpha$ value of the present emulsion formulations may be from about 0.5 to about 2.0, including the values 0.5, 0.6, 0.7, 0.8, 0.9, 1.0, 1.1, 1.2, 1.3, 1.4, 1.5, 1.6, 1.7, 1.8, 1.9, and 2.0. Whereas it is commonly understood that Kraft lignin may act as a water-resistance extender of paraffin wax, the compositions of the emulsions described herein unexpectedly demonstrate that Kraft lignin and refined paraffin wax can perform equally and synergistically in terms of water-resistance performance. More specifically, the inventors have found that a higher $\alpha$ value than was previously known imparts advantageous performance characteristics for the manufactured wallboard incorporating the emulsions described herein.

Similarly, for the dispersions described herein, the inventors have found that an $\alpha$ value lower than that for emulsions would be acceptable. More specifically, as illustrated in the present description, the $\alpha$ value for the present dispersions may be from about 0.09 to about 2.25, including the values 0.09, 0.10, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, and 2.25.

In one embodiment, the emulsions described herein, once formed, are preferably kept at an elevated temperature, such as about 25 °C or above, preferably about 80 °C or above. The subject emulsions may be added directly to a gypsum slurry for forming a gypsum wallboard. Thus, the present emulsions may be formed and maintained at any time prior to being needed, which provides a unique advantage by avoiding the need to prepare the formulation when required for addition to a gypsum slurry.

In another embodiment, the dispersions described herein can be formed by mixing an aqueous solution comprising the lignin and base components with an aqueous dispersion of the wax. Such mixing can take place immediately before addition to a gypsum slurry. Alternatively, the aqueous lignin/base solution and the aqueous wax dispersion can be individually added to a gypsum slurry and mixed therein.

In a further embodiment the emulsion has a particle size of less than about 50 micron. In a further embodiment the particle size is in the range of about 1 to about 10 microns.

The shift towards higher $\alpha$ values allows for optimization of both the Kraft lignin dosage as well as the paraffin dosage. As used herein, the term "optimization" refers to the improvement in water absorption (WA) performance while reducing the cost of the product. As is known in the art, the WA values are determined by industry standards, and accordingly may vary depending on the board being manufactured. The dosage of Kraft lignin and paraffin wax can therefore be set independently and in relation to the amount of gypsum (dry/dry). As a result, the dosage and composition of the Kraft lignin-refined paraffin wax emulsion can be optimized to achieve WA target while minimizing cost.

It is interesting to note that, although a Kraft lignin -paraffin wax emulsion, in particular an emulsion comprising Kraft lignin and a refined paraffin wax, as described herein was found to provide water resistance to gypsum wallboard, the individual components of the emulsion on their own do not. That is, when used separately, neither Kraft lignin nor molten refined paraffin wax can provide an adequate level of water resistance. When molten refined paraffin wax is added directly to the gypsum slurry the wax quickly congeals and aggregates, resulting in poor distribution and, consequently, poor WA performance. Without being bound to theory, it is believed that in the absence of paraffin wax the Kraft lignin is unable to effectively block pores and reduce tortuosity in the gypsum matrix to prevent water intrusion. This explains the water resistance effect of the present Kraft lignin-paraffin wax emulsion. Additionally, and as demonstrated by the examples herein, the separate use of Kraft lignin or paraffin wax (i.e. not emulsified) in a gypsum slurry does not provide an adequate level of water resistance of the manufactured gypsum board, further illustrating the synergistic effect.

As a result of this interdependency of Kraft lignin and wax, there thus exists a minimum dosage of Kraft lignin and wax (in one embodiment, a refined paraffin wax) that is required to achieve adequate water resistance performance. As discussed previously, the minimum dosage of Kraft lignin is related to the emulsification of paraffin wax. The minimum dosage of wax is related to achieving adequate water resistance performance; if the dosage of wax is below a threshold value no amount of Kraft lignin can compensate for it in terms of water resistance performance. Conversely, if the wax dosage exceeds the threshold value, the dosage of Kraft lignin can be adjusted to achieve optimum water resistance performance (see Fig. 1).

Kraft lignin can also be used as a performance additive to improve the water resistance performance of wax dispersions. Contrary to Kraft lignin -wax emulsions, wax dispersions, such as refined paraffin wax dispersions, and more ideally stable paraffin wax dispersions, can be used without Kraft lignin to provide the desired WA performance (i.e. $\alpha = 0$). However, the inventors have found that the addition of Kraft lignin can significantly increase the water resistance performance of the wax dispersion (i.e. $\alpha > 0$). In this embodiment, Kraft lignin is not required to emulsify the refined paraffin wax but adds to the water resistance performance of the wax. A minimum dosage of wax dispersion is required to achieve adequate water resistance performance. The inventors have found that, in the presence of increasing dosage of Kraft lignin, the dosage of refined paraffin wax dispersion can be reduced whilst maintaining adequate water resistance performance. Consequently, the overall dosage of water resistance additive can be lowered or the composition adjusted to achieve optimum water resistance performance while minimizing cost. This is illustrated in the example described herein, and as shown in Fig. 2, where it is demonstrated that, for a wax dispersion, a dosage of 0.92 w/w% to gypsum is required to achieve adequate water resistance performance (WA = 1.836%). The total dosage can be reduced to 0.74 w/w% to gypsum (20% reduction) through a combined dosage of 0.59 w/w% wax dispersion and 0.15 w/w% Kraft lignin ($\alpha = 0.254$) with a WA of 0.352%. Conversely, the total dosage can be maintained at 0.92 w/w% to gypsum through a combined dosage of 0.57 w/w% wax dispersion and 0.35 w/w% Kraft lignin ($\alpha = 0.603$) with a WA of 0.269%.

Thus, in one embodiment, the compositions comprising a Kraft lignin-wax emulsion offer significant reduction in cost. This benefit is attributable to a few factors, for example: 1. the composition consists of two main components which are commercially available; 2.the composition does not require additional stabilizers, dispersants, or additives; and 3. the composition can be manufactured on-site and on-demand, eliminating manufacture and transportation cost. As a result, the compositions described herein are more cost effective when compared to commercial wax dispersions. Furthermore, the cost contribution of the compositions described herein in US$ per thousand square feet (MSF) is comparable to that of organosiloxanes, thus providing a cost competitive alternative to the use of organosiloxanes, which has heretofore been considered impossible in the industry.

Additionally, the fact that no additives such as polyvinyl alcohol, polyvinyl alcohol derivates, lignosulfonates, functional waxes, etc. are required to achieve the desired water-resistance performance results in a reduced impact on important process attributes such as slump and set. It is well known in the art that polyvinyl alcohol and polyvinyl alcohol derivates can negatively affect the water demand of the gypsum slurry, measured as a decreased slump. This then requires additional water to be added to the process, which in turn negatively affects the drying time in the oven and reduces overall process output. The fact that the compositions described herein do not require any additives therefore has benefits beyond the reduction of manufacturing cost.

As discussed above, the compositions described herein are particularly suitable for imparting water repellency, or water resistance, characteristics to gypsum wallboards. As would be understood by persons skilled in the art, to manufacture such wallboards, the compositions described herein would be combined with commonly known gypsum slurries, which would then be formed into boards in the known manner. As would also be understood, the presence of the composition in the gypsum component of the board would then serve to mitigate against water impregnation into the board.

## Examples

The present invention will be further explained and illustrated by the following comparative examples and test results. These examples are intended to describe the properties of this invention and not to limit the invention in any way.

## Methods

Emulsion stability is determined visually by assessing the degree of creaming and coalescence of the hot wax emulsion. 30 mL of hot wax emulsion is measured into a preheated graduated cylinder, which is subsequently submerged into a 80 - 90°C transparent silicone oil bath. Typically, a few drops of food colouring are added to hot wax emulsion to enhance visibility of creaming. The stability of the emulsion is assessed after 15 min, using a qualitative classification for the degree of creaming ("w") and/or the degree of coalescence ("o"). The classification scale ranges from 0 (no creaming and/or coalescence) to 4 (> 3 mL or > 10% of creaming and/or coalescence).

0 = no creaming and/or coalescence

1 = < 0.3 mL or < 1% of creaming and/or coalescence

2 = 0.3 - 1 mL or 1 - 3% of creaming and/or coalescence

3 = 1mL - 3 mL or 3 - 10% of creaming and/or coalescence

4 = (> 3 mL or > 10% of creaming and/or coalescence

For the intended purpose of this invention; a stable wax emulsion is defined as having an emulsion stability classification of 0, 1w, 1o, or 1w 1o.

Kraft Lignin solutions

Kraft Lignin solutions are prepared by adding solid purified Kraft lignin powder to hot water at 80°C containing a predetermined amount of a water-soluble base under vigorous agitation. For strong water-soluble bases such as monoethanolamine, potassium hydroxide, or sodium hydroxide, a minimum equivalent base mass ratio $\beta$ of 0.13 is used to ensure complete solubility of the Kraft lignin.

Application testing

Gypsum pucks are prepared by the addition of the wax emulsion (> 80oC) or dispersion (RT) to water at 25°C under gentle agitation. Slurry composition (w/w): 102.6 parts of gypsum (Plaster of Paris), 60.9 parts of water, and 0.94 parts of aqueous wax dispersion (dry-basis). Following dilution of the wax emulsion or dispersion with water, the required amount of gypsum (Plaster of Paris) is added and the resulting slurry mixed for 2 minutes. Aliquots of the slurry (100 g) are poured into pre-weighted aluminum trays (d = 70 mm, h = 16 mm), before allowing to set at ambient conditions for 60 min. The set pucks are then removed from the trays and allowed to dry a further 120 min at 75-85°C to +/- 1 g of their target weight.

Water absorption (WA) of the gypsum pucks is measured by submerging the samples into a water bath conditioned to 25°C. The amount of absorbed water is measured gravimetrically after 120 min.

Slump is measured by preparing a gypsum slurry by combining water, gypsum (Plaster of Paris), potassium hydroxide, and an aqueous wax dispersion. After a set amount of mixing time, the slurry is poured into a pipe and released to form a gypsum disc. The diameter of the disc is a measure of the slump of the gypsum slurry.

Set is measured by preparing a gypsum slurry by combining water, gypsum (Plaster of Paris), potassium hydroxide, and an aqueous wax dispersion. After a set amount of mixing time, the slurry is poured into a pipe and released to form a gypsum disc. The set is measured using a Gillmore Apparatus using a ¼ lb needle and defined as the time where the indentation of the needle does not surpass the needle head.

Example 1: Water repellency performance of Kraft Lignin solution

Kraft Lignin was evaluated independently for its effectiveness in reducing WA in gypsum. A Kraft lignin solution was prepared by dissolving BioPiva™ (UPM) in water using potassium hydride at $\beta$ = 0.13. The resulting Kraft lignin solution was measured to contain 22.2% solids, a pH of 10.4, and a viscosity of 21 cP. Kraft Lignin was compared in terms of water repellency performance against a blank (i.e. gypsum slurry only) and control (i.e. CS800ND; a commercial wax dispersion produced by Walker Emulsions Ltd.). Water repellency additives are added at 0.5% (dry solids) of the slurry composition.

Table 1

| Additive | WA [%] | Slurry [visual observation] |
|---|---|---|
| None (blank) | 15.8 | Fluid |
| Kraft Lignin solution (aqueous alkaline) | 19.2 | Fluid |
| Wax dispersion (control) | 2.2 | Fluid |

The results of this experiment demonstrate that solubilized Kraft Lignin does not significantly reduce the WA performance of the gypsum pucks.

Example 2: Water repellency performance of Kraft Lignin and refined paraffin wax

Kraft lignin and a refined paraffin wax were evaluated for their effectiveness in reducing WA in gypsum. Kraft lignin (BioPiva™; UPM) was added as a powder to the gypsum slurry. Refined paraffin wax (1212U; The International Group) was melted at approx. 80°C and added as a liquid directly to the gypsum slurry. Following addition, the gypsum slurry was agitated at high speed for 120 seconds. The water repellency additives were added at 0.84% (dry solids) of the slurry composition. Water repellency performance was measured against a control (i.e. CS800ND; a commercial wax dispersion produced by Walker Emulsions Ltd.).

Table 2

| Additive | WA [%] | Slurry [visual observation] |
|---|---|---|
| Kraft lignin powder | 14.1 | Smooth and fluid |
| Refined Paraffin wax (molten) | 15.0 | Wax fallout |
| Kraft lignin powder and Refined Paraffin wax (molten) | 16.0 | Wax fallout |
| Wax dispersion (control) | 1.0 | Fluid |

The results of this experiment demonstrate that Kraft Lignin powder and molten refined paraffin wax do not significantly reduce the WA performance of gypsum pucks. The Kraft lignin powder dissolves in the alkaline gypsum slurry, however, similarly to the previous experiment, there is no reduction in WA performance. The molten refined paraffin wax congeals when in contact with the gypsum slurry and aggregates into wax fallout. The distribution of wax is inadequate to reduce WA. It is well known in the art that distribution of wax is critical for good WA performance, and therefore wax is incorporated into the gypsum slurry in the form of a wax dispersion (which has been taught e.g. by US 2,432,963 by Camp et al.).

Example 3: Aqueous wax emulsion stability

Aqueous wax emulsions were prepared by emulsifying a refined paraffin wax (1212U, The International Group) above the melting point of the wax with the Kraft Lignin solution reported in Example 1. The ratio of Kraft lignin to refined paraffin wax is expressed as $\alpha$, where $\alpha$ = dry mass of lignin/mass of wax. The resulting wax emulsion was agitated under high shear using a Silverson L5M-A mixer for 1 minute and kept at 85°C to prevent congealing of the wax. The stability of the aqueous wax emulsions was determined:

Table 3

| $\alpha$ [-] | Stability Refined Paraffin [-] | Stability Paraffin [-] |
|---|---|---|
| 0.025 | | 1w |
| 0.050 | | 0 |
| 0.100 | | 0 |
| 0.125 | 2o/2w | |
| 0.250 | 1o/1w | |
| 0.300 | 0 | |
| 0.600 | 0 | |

The results of this experiment demonstrate that a significantly higher $\alpha$ is required to obtain a stable aqueous refined paraffin wax emulsion. An $\alpha$ of 0.25 was found to be sufficient to produce a stable lignin-refined paraffin wax emulsion.

Example 4: Water repellency performance of wax emulsions

The water repellency performance of wax emulsions containing Kraft lignin and refined paraffin (1212U, The International Group) were evaluated. The wax emulsion was prepared by combining molten 1212U (85°C) with a Kraft Lignin solution at $\alpha$ = 0.30. Additionally, another wax emulsion was prepared containing 3.5 w/w% functional wax (olefinic succinic anhydride, "OSA") in the wax phase which is known in the art to be beneficial for WA performance. Both wax emulsions were agitated under high shear using a Silverson L5M-A mixer for 1 minute and kept at 85°C. The resulting emulsions were found to have a stability rating of 0 (i.e. no creaming or coalescence at 85°C for a minimum of 15 minutes). The wax emulsions can also be cooled to 25°C and remain stable, i.e. a stability rating of 0. The emulsions (at 85°C) were then diluted with water and incorporated into the gypsum slurry. No fallout or visual separation of the wax was observed, suggesting that the wax remains homogeneously dispersed in the gypsum slurry. Gypsum pucks were compared in terms of water repellency performance against a blank (i.e. gypsum slurry only) and control (i.e. CS800ND; a commercial wax dispersion produced by Walker Emulsions Ltd.).

Table 4

| Additive | WA [%] | Slurry [visual observation] |
|---|---|---|
| Wax emulsion with Kraft lignin | 2.2 | Fluid |
| Wax emulsion with Kraft lignin and OSA | 2.4 | Fluid |
| Wax dispersion (control) | 1.1 | Fluid |

The results of this experiment demonstrate that stable wax emulsions prepared above the melting point of the wax can be added to a gypsum slurry and provide effective water repellency performance. A small amount of functional wax may be included to improve WA performance.

Example 5: Kraft Lignin stabilized wax emulsions

A custom response design was setup to determine the effect of $\alpha$ and dosage on the water repellency performance of the wax emulsion. The solids content of the wax emulsion was kept constant at 40 w/w%. Two factors were used for the design of experiment (DOE):

Factor A - $\alpha$ ranging from 0.03 (-) to 0.60 (+)

Factor B - Wax emulsion dosage ranging from 0.5% (-) to 1.5% (+)

wherein the Wax emulsion dosage is the solid material of the wax emulsion (wax + lignin)/gypsum.

Solids content (w/w%) = wax content (w/w%) + Kraft lignin content (w/w%)

Two controls (i.e. CS800ND; a commercial wax dispersion produced by Walker Emulsions Ltd.) were included for comparison.

The results of the DOE were analyzed in terms of the responses listed in Table 5.

Table 5

| $\alpha$ [-] | Dosage [%] | Stability [-] | WA [%] | Slump [inch] | Set [s] |
|---|---|---|---|---|---|
| 0.03 | 1.5 | 1w | 18.3 | $5^{3/4}$ | 295 |
| 0.60 | 0.5 | 0 | 4.5 | $6^{3/16}$ | 315 |
| 0.60 | 0.5 | 0 | 4.8 | $6^{7/8}$ | 335 |
| 0.08 | 1.0 | 2o/1w | 17.1 | $6^{15/16}$ | 329 |
| 0.25 | 0.63 | 1o/1w | 7.1 | $6^{15/16}$ | 322 |
| 0.03 | 1.5 | 0/1w | 18.5 | $6^{1/4}$ | 280 |
| 0.25 | 1.37 | 2o/2w | 0.9 | $5^{7/8}$ | 320 |
| 0.49 | 1.0 | 0 | 0.8 | $5^{13/16}$ | 315 |
| 0.60 | 1.5 | 0 | 0.4 | $3^{7/8}$ | 326 |
| 0.03 | 0.5 | 1w | 19.1 | $7^{1/16}$ | 287 |
| 0 | 0.75 | n/a | 1.8 | $4^{1/2}$ | 287 |
| 0 | 0.75 | n/a | 1.4 | $4^{1/2}$ | 240 |

From this analysis the following conclusions can be made:

1) Within the $\alpha$ range listed above, wax emulsions can be made, however, stable wax emulsions (i.e. no creaming or coalescence at 85°C for a minimum of 15 minutes) could only be achieved with a $\alpha$ of 0.30 or greater.

2. The WA is governed by both $\alpha$ and the dosage, there is a combined effect of both factors. WA decreases from close to 20% at $\alpha$ < 0.05 to below 1% at an $\alpha$ = 0.60 at an equivalent wax emulsion dosage of 1.5%. As the amount of wax in the wax emulsion decreases as $\alpha$ increases (total solids content was kept constant at 40 w/w%) this then suggests that Kraft lignin contributes to the WA performance of the wax emulsion composition. The best formulations outperform the wax dispersion control.

3) Slump is minimally affected by the $\alpha$ but to a larger extent by the dosage. In virtual all experiments performed the slump is increased as compared to the wax dispersion control. This is a positive effect as it suggests the amount of water used in the slurry formulation can be reduced. The increased fluidity is likely an effect of the absence of polyvinyl alcohol, which is known to negatively affect fluidity.

4) Set time increases linearly with increasing $\alpha$ and to a lesser extent with the increasing dosage. In virtual all experiments performed the set time is increased as compared to the wax dispersion control.

The results of this experiment show an optimal $\alpha$ range of approximately 0.37 to 0.60 and a dosage range of approximately 0.8% to 1.0% was found to optimal for the conditions of this experiment. These results demonstrate that a suitable wax for providing water resistance to gypsum wallboard can be emulsified on-site using a Kraft lignin solution and used immediately in the manufacture of water-resistant gypsum wallboard.

Example 6: Optimal compositions

WA performance of refined paraffin wax (1212U; The International Group) and Kraft lignin (BioPiva™; UPM) was evaluated by varying the Kraft lignin and refined paraffin wax dosage as compared to gypsum (dry/dry; w/w%). Prior to addition to the gypsum slurry, the refined paraffin wax and Kraft lignin solution ($\beta = 0.13$) were emulsified using a Silverson L5M-A mixer for 1 minute and kept at 85oC. A control (i.e. CS800ND™; a commercial wax dispersion produced by Walker Emulsions Ltd.) dosed at 0.73% (dry solids) of the slurry composition resulted in a WA of 1.47%.

Table 6

| Kraft Lignin / gypsum [w/w%] | Refined paraffin wax/ gypsum [w/w%] | Solids content [%] | $\alpha$ [-] | WA [%] |
|---|---|---|---|---|
| 0.30 | 0.25 | 31.4 | 1.2 | 1.98 |
| 0.40 | 0.10 | 23.8 | 4.0 | 18.4 |
| 0.60 | 0.15 | 23.9 | 4.0 | 14.3 |
| 0.47 | 0.33 | 29.7 | 1.4 | 0.88 |
| 0.35 | 0.50 | 37.9 | 0.7 | 0.73 |
| 0.60 | 0.50 | 31.4 | 1.2 | 0.43 |
| 0.47 | 0.33 | 29.7 | 1.4 | 0.82 |

The results of this experiment demonstrate that there is a combined effect of the refined paraffin wax and Kraft lignin for WA performance. Increasing the amount of refined paraffin wax in the presence of an insufficient amount of Kraft lignin (i.e. < approx. 0.12 w/w% lignin/gypsum) only shows a marginal improvement in terms of WA. Similarly, increasing the amount of Kraft lignin in the presence of an insufficient amount refined paraffin wax (i.e. < approx. 0.2 w/w% wax/gypsum) also only shows a marginal improvement in terms of WA. However, when both lignin/gypsum and wax/gypsum are raised above a threshold value (i.e. > approx. 0.20 w/w% lignin/gypsum and > approx. 0.20 w/w% wax/gypsum), WA decreases rapidly to commercially acceptable values (i.e. < 2% WA). Further increasing the lignin/-gypsum and wax/gypsum dosage decreases the WA to a minimum, after which the decrease in WA plateaus. This result then suggests that there is an optimal composition in terms of performance as well as cost, and these two variables can be optimized to achieve maximum performance and minimal cost.

Example 7: Kraft lignin additive (1)

WA performance of a refined paraffin wax dispersion and a Kraft lignin solution additive was evaluated by varying the Kraft lignin and refined paraffin wax dosage as compared to gypsum (dry/dry; w/w%). The stable refined paraffin wax dispersion was prepared using a method previously in US 2023/0265016. Briefly, a wax phase comprising refined paraffin wax (45.6%; 1212U, The International Group) and functional wax (3.0%) was emulsified with an alkaline aqueous phase containing fully hydrolyzed polyvinyl alcohol (1.3%; POVAL™ 4-98, Kuraray), homogenized, and cooled. Final solids = 49.4%, pH = 9.3, viscosity = 32 cP. A Kraft lignin solution was prepared by dissolving BioPiva™ (UPM) in water using potassium hydride at $\beta = 0.13$. The resulting Kraft lignin solution was measured to contain 21.5% solids. The stable refined paraffin wax dispersion and Kraft lignin solution were combined and added to the gypsum slurry.

Table 7

| Kraft Lignin / gypsum [w/w%] | Refined paraffin wax/ gypsum [w/w%] | Total dose [w/w%] | α [-] | WA [%] |
|---|---|---|---|---|
| 0.00 | 0.74 | 0.74 | 0.00 | 16.8 |
| 0.16 | 0.45 | 0.61 | 0.38 | 5.65 |
| 0.20 | 0.45 | 0.65 | 0.49 | 1.36 |
| 0.29 | 0.25 | 0.54 | 1.25 | 6.13 |

The results of this experiment demonstrate that Kraft lignin can be used as a performance additive for improving water resistance characteristics of the manufactured gypsum board. The refined paraffin wax dispersion dosed at 0.74 w/w% to gypsum cannot provide effective water resistance (WA > 5%). However, the addition of Kraft lignin solution can increase the water resistance performance to commercially acceptable values (i.e. < 2% WA). Furthermore, this result was achieved by lowering the dose of refined paraffin wax dispersion.

Example 8: Kraft lignin additive (2)

Similarly to Example 7, WA performance of a refined paraffin wax dispersion and a Kraft lignin solution additive was evaluated by varying the Kraft lignin and refined paraffin wax dosage as compared to gypsum (dry/dry; w/w%). The difference being that the stable refined paraffin wax dispersion was prepared without polyvinyl alcohol according to the method described above. The wax phase comprising refined paraffin wax (46.8%; 1212U, The International Group) and functional wax (3.1%) was emulsified with an alkaline aqueous phase. Final solids = 50.0%, pH = 9.3, viscosity = 15 cP). A Kraft lignin solution was prepared by dissolving BioPiva™ (UPM) in water using potassium hydride at β = 0.13. The resulting Kraft lignin solution was measured to contain 21.5% solids. The stable refined paraffin wax dispersion and Kraft lignin solution were combined and added to the gypsum slurry.

Table 8

| Kraft Lignin / gypsum [w/w%] | Refined paraffin wax/ gypsum [w/w%] | Total dose [w/w%] | α [-] | WA [%] |
|---|---|---|---|---|
| 0.00 | 0.74 | 0.74 | 0.00 | 16.1 |
| 0.10 | 0.60 | 0.70 | 0.17 | 4.38 |
| 0.20 | 0.45 | 0.65 | 0.44 | 1.54 |
| 0.20 | 0.74 | 0.94 | 0.27 | 1.08 |
| 0.30 | 0.25 | 0.55 | 1.20 | 1.39 |
| 0.45 | 0.20 | 0.65 | 2.25 | 1.81 |

The results of this experiment confirm the observations from Example 7. Furthermore, the results of this experiment demonstrate that the presence of polyvinyl alcohol is not required to achieve adequate water resistance performance.

Example 9: Optimising Kraft lignin additive performance

WA performance of a refined paraffin wax dispersion and a Kraft lignin solution additive was evaluated by varying the Kraft lignin and refined paraffin wax dosage as compared to gypsum (dry/dry; w/w%). The stable refined paraffin wax dispersion was prepared using the method as described in Example 7. Briefly, a wax phase comprising refined paraffin wax (43.7%; 1212U™, The International Group) and functional wax (2.9%) was emulsified with an alkaline aqueous phase containing fully hydrolyzed polyvinyl alcohol (3.3%; POVAL™ 4-98, Kuraray), homogenized, and cooled. Final solids content = 48.9%, pH = 9.2, viscosity = 61 cP. A Kraft lignin solution was prepared by dissolving BioPiva™ (UPM) in water using potassium hydride at β = 0.13. The resulting Kraft lignin solution was measured to contain 21.5% solids. The stable refined paraffin wax dispersion and Kraft lignin solution were combined and added to the gypsum slurry.

Table 9

| Kraft Lignin / gypsum [w/w%] | Refined paraffin wax/ gypsum [w/w%] | Total dose [w/w%] | α [-] | WA [%] |
|---|---|---|---|---|
| 0.050 | 0.150 | 0.200 | 0.333 | 17.80 |
| 0.050 | 0.150 | 0.200 | 0.333 | 18.99 |

(continued)

| Kraft Lignin / gypsum [w/w%] | Refined paraffin wax/ gypsum [w/w%] | Total dose [w/w%] | $\alpha$ [-] | WA [%] |
|---|---|---|---|---|
| 0.116 | 0.170 | 0.286 | 0.682 | 18.54 |
| 0.073 | 0.250 | 0.323 | 0.292 | 13.41 |
| 0.073 | 0.250 | 0.323 | 0.292 | 14.56 |
| 0.183 | 0.162 | 0.345 | 1.130 | 16.31 |
| 0.050 | 0.350 | 0.400 | 0.143 | 9.865 |
| 0.050 | 0.350 | 0.400 | 0.143 | 13.55 |
| 0.146 | 0.302 | 0.448 | 0.483 | 8.897 |
| 0.300 | 0.150 | 0.450 | 2.000 | 16.95 |
| 0.350 | 0.100 | 0.450 | 3.500 | 17.56 |
| 0.300 | 0.150 | 0.450 | 2.000 | 18.56 |
| 0.243 | 0.228 | 0.471 | 1.066 | 10.86 |
| 0.103 | 0.450 | 0.553 | 0.229 | 1.343 |
| 0.236 | 0.343 | 0.579 | 0.688 | 0.958 |
| 0.181 | 0.410 | 0.591 | 0.441 | 0.688 |
| 0.181 | 0.410 | 0.591 | 0.441 | 0.823 |
| 0.050 | 0.550 | 0.600 | 0.091 | 0.561 |
| 0.300 | 0.300 | 0.600 | 1.000 | 2.085 |
| 0.118 | 0.503 | 0.621 | 0.235 | 0.798 |
| 0.091 | 0.553 | 0.644 | 0.165 | 0.688 |
| 0.100 | 0.558 | 0.658 | 0.179 | 0.533 |
| 0.217 | 0.523 | 0.740 | 0.414 | 0.478 |

The results of this experiment demonstrate that, similarly to Example 6, there is a combined, or synergistic effect achieved by the combination of the refined paraffin wax and Kraft lignin for WA performance. In the absence, or in the presence of a small dose of Kraft lignin (approx. < 0.125 w/w%) acceptable water resistance performance (i.e. < 2% WA) can be achieved in the presence of relatively high dose of refined paraffin wax dispersion (approx. > 0.444 w/w%). Once the dose of Kraft lignin is increased (approx. > 0.125 w/w%), the dose of refined paraffin wax dispersion can be reduced whilst maintaining acceptable water resistance performance, see Fig. 2. This result then suggests that there is an optimal composition in terms of performance as well as cost, and these two variables can be optimized to achieve maximum performance and minimal cost.

Example 10: Commercial example

A commercial wax dispersion was combined with a Kraft lignin solution to demonstrate the benefits of a Kraft lignin additive for WA performance. As the exact composition of the wax dispersion is unknown, $\alpha$ will be defined based on the solids content of the wax dispersion (57%). A Kraft lignin solution was prepared by dissolving BioPiva™ (UPM) in water using potassium hydride at $\beta = 0.13$. The resulting Kraft lignin solution was measured to contain 21.5% solids. The stable refined paraffin wax dispersion and Kraft lignin solution were combined and added to the gypsum slurry.

Table 10

| Kraft Lignin / gypsum [w/w%] | Refined paraffin wax/ gypsum [w/w%] | Total dose [w/w%] | $\alpha$ [-] | WA [%] |
|---|---|---|---|---|
| 0 | 0.552 | 0.552 | 0 | 10.7 |
| 0 | 0.736 | 0.736 | 0 | 9.07 |
| 0 | 0.92 | 0.92 | 0 | 1.836 |

(continued)

| Kraft Lignin / gypsum [w/w%] | Refined paraffin wax/ gypsum [w/w%] | Total dose [w/w%] | α [-] | WA [%] |
|---|---|---|---|---|
| 0.02 | 0.71 | 0.73 | 0.028 | 2.4 |
| 0.06 | 0.68 | 0.74 | 0.088 | 1.17 |
| 0.07 | 0.85 | 0.92 | 0.082 | 0.866 |
| 0.1 | 0.64 | 0.74 | 0.156 | 0.615 |
| 0.15 | 0.59 | 0.74 | 0.254 | 0.352 |
| 0.19 | 0.73 | 0.92 | 0.26 | 0.309 |
| 0.35 | 0.58 | 0.93 | 0.603 | 0.269 |

The results of this experiment demonstrate that a Kraft lignin additive can increase water resistance performance and reduce the total dose of water resistance additive to the gypsum slurry. In the absence of Kraft lignin, a dosage of 0.92 w/w% of wax dispersion is required to achieve acceptable water resistance performance (i.e. < 2% WA). Upon introduction of Kraft lignin similar, or better, WA results can be obtained at wax dispersion dosage < 0.92 w/w%. The individual dosage of wax dispersion and Kraft lignin can be varied independently in order to achieve WA targets while minimizing cost.

Although the invention has been described with reference to certain specific embodiments, various modifications thereof will be apparent to those skilled in the art without departing from the purpose and scope of the invention as outlined in the claims appended hereto. Any examples provided herein are included solely for the purpose of illustrating the invention and are not intended to limit the invention in any way. Any drawings provided herein are solely for the purpose of illustrating various aspects of the invention and are not intended to limit the invention in any way. The disclosures of all prior art recited herein are incorporated herein by reference in their entirety.

**Claims**

1. A composition for use as an additive in the manufacture of gypsum wallboards for imparting water resistance to the manufactured gypsum wallboard, said composition comprising:

   a) an aqueous emulsion of Kraft lignin, wax, water, and a base, wherein:

      - the wax is in a molten state;
      - the base is present in an amount sufficient to solubilize the Kraft lignin; and,
      - the weight ratio of Kraft lignin to wax, $\alpha$, is at least about 0.25;

   or
   b) an aqueous dispersion comprising a Kraft lignin, wax, water, and a base, wherein:

      - the wax forms the solid phase;
      - the base is present in an amount sufficient to solubilize the Kraft lignin; and,
      - the weight ratio of Kraft lignin to wax, $\alpha$, is from about 0.09 to about 2.25.

2. The composition of claim 1, wherein, for composition (a), the Kraft lignin is present in an amount of at least about 0.20 w/w% relative to gypsum and the wax is present in an amount of at least about 0.20 w/w% relative to gypsum.

3. The composition of claim 1 or 2, wherein the weight ratio of the base to lignin, $\beta$, is: at least about 0.10; in the range from about 0.1 to about 0.2; or is 0.13.

4. The composition of any one of claims 1 to 3, wherein $\alpha$ is: at least about 0.50; or in the range from about 1.0 to about 2.0.

5. The composition of any one of claims 1 to 4, wherein the wax is: a petroleum derived slack wax, scale wax, or a refined wax; a synthetic wax; or a natural wax.

6. The composition of claim 5, wherein the wax is a paraffin wax or a refined paraffin wax.

7.   The composition of claim 5, wherein the synthetic wax is an alphaolefin wax or a Fischer Tropsch wax.

8.   The composition of any one of claims 1 to 7, wherein the wax further includes at least one functionalized wax, wherein the functionalized wax is a crude or refined Montan wax, an olefinic succinic anhydride wax, an oxidized polyethylene wax, or an oxidized polypropylene wax.

9.   The composition of any one of claims 1 to 8, wherein the Kraft lignin is purified Kraft lignin.

10.  The composition of any one of claims 1 to 9, wherein the Kraft lignin is derived from a LignoBoost™ process, a LignoForce™ process, or another purification process.

11.  The composition of any one of claims 1 to 10, wherein the base is at least one of sodium hydroxide, potassium hydroxide, and monoethanolamine.

12.  A use of the composition of any one of claims 1 to 11 in the manufacture of a gypsum wallboard, the use comprising:

  - mixing the composition into a gypsum slurry; and
  - forming the wallboard.

13.  A method of preparing the composition of any one of claims 1 to 11 comprising:

  i) for composition (a):

    - combining an aqueous solution comprising the Kraft lignin and the base with the molten wax; and
    - emulsifying the mixture of the lignin and base solution and the molten wax under high shear to form an emulsion;

  or,
  ii) for composition (b):

    - mixing an aqueous solution of Kraft lignin and the base with an aqueous dispersion of the wax.

14.  The method of claim 13, wherein, for (i), the method further comprises maintaining the emulsion at a temperature above 85°C or above 25°C.

15.  The method of claim 13, wherein, for (ii), the mixing is performed immediately before adding to a gypsum slurry or in combination with a gypsum slurry.

Fig. 1

Fig. 2

Europäisches
Patentamt
European
Patent Office
Office européen
des brevets

## EUROPEAN SEARCH REPORT

**Application Number**

EP 25 19 2041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 752 660 B2 (WALKER INDUSTRIES HOLDINGS LTD [CA]) 12 September 2023 (2023-09-12) * column 10, lines 18-27; claims; figures 1,2,4; tables 3-5 * * column 13, lines 47-55 * * examples * | 1-3,5-15 | INV. C04B28/14 C04B40/00 C04B111/27 |
| X,D | US 2023/265016 A1 (SINNIGE LAURENCE ANTHONY [CA] ET AL) 24 August 2023 (2023-08-24) * paragraphs [0108], [0117] - [0120]; claims 1-3, 5, 7-9, 13, 15, 18, 20, 21,25; table 4 * | 1-13,15 | |
| A | CN 107 216 105 A (MINGGUANG TAIFENG NEW MAT CO LTD) 29 September 2017 (2017-09-29) * claims * | 1-15 | |

**TECHNICAL FIELDS SEARCHED (IPC)**

C04B

The present search report has been drawn up for all claims

| Place of search | Date of completion of the search | Examiner |
|---|---|---|
| The Hague | 17 December 2025 | Baldé, Kaisa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 2041

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | | Publication date | Patent family member(s) | | Publication date |
|---|---|---|---|---|---|
| US 11752660 | B2 | 12-09-2023 | CA | 3091213 A1 | 26-02-2021 |
| | | | US | 2021060814 A1 | 04-03-2021 |
| | | | US | 2023356430 A1 | 09-11-2023 |
| | | | US | 2024326285 A1 | 03-10-2024 |
| US 2023265016 | A1 | 24-08-2023 | NONE | | |
| CN 107216105 | A | 29-09-2017 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63676093
- US 3455710 A, Nitzsche
- US 5135805 A, Sellers
- US 20100116406 A1, Mahoney and Burns
- US 5968237 A, Sinnige
- US 9045370B2 A, Stuart, Lyons, and Perera
- US 9670097B2 A, Ayambem, Gonzalez, and Sproul
- US 6908677 B2, Shoshany
- US 6902615 B2, Shoshany
- WO 2014116150 A1
- US 9091023 B2
- US 2464828 A, Pollak
- US 8821632 B
- US 20230265016 A

**Non-patent literature cited in the description**

- **A. D. MCNAUGHT** ; **A. WILKINSON**. IUPAC. Compendium of Chemical Terminology. Blackwell Scientific Publications, 1997
- **EKIELSKI, A.** ; **MISHRA, P.K.** *Int. J. Mol. Sci.*, 2021, vol. 22, 63
- **A. D. MCNAUGHT** ; **A. WILKINSON**. IUPAC, Compendium of Chemical Terminology. Blackwell Scientific Publications, 1997
- **RODRIQUEZ-VALVERDE, M.A. et al.** Influence of Oil Content in Paraffins on the Behavior of Wax Emulsions: Wetting and Rheology. *J. Dispersion Sci. Tech.*, 2006, vol. 27, 155-163